(19) Europäisches Patentamt
European Patent Office
Office européen des brevets

(11) Publication number: 0 005 453
B1

(12) EUROPEAN PATENT SPECIFICATION

(45) Date of publication of patent specification: 01.06.83

(51) Int. Cl.³: B 28 D 1/22, B 23 D 17/08, G 05 G 1/04

(21) Application number: 79101130.7

(22) Date of filing: 12.04.79

(54) **A lever mechanism, particularly applied to stone cutting machine tools, having a variable leverage.**

(30) Priority: 13.04.78 IT 8361478

(43) Date of publication of application:
28.11.79 Bulletin 79/24

(45) Publication of the grant of the patent:
01.06.83 Bulletin 83/22

(84) Designated Contracting States:
BE CH DE FR GB LU NL SE

(56) References cited:
FR - A - 525 292
FR - A - 959 271
GB - A - 333 781
GB - A - 621 263
US - A - 2 712 851

(73) Proprietor: BREVETTI MONTOLIT S.P.A.
I-21050 Cantello (Varese) (IT)

(72) Inventor: Montoli, Ezio
Via Monterosa 22
I-21050 Cantello (Varese) (IT)

(74) Representative: Sassi, Romano
Viale Belforte 89
I-21100 Varese (IT)

EP 0 005 453 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

# A lever mechanism, particularly applied to stone cutting machine tools, having a variable leverage

The invention relates to a lever mechanism for power transfer comprising a power transfering cam movable about its axis a control lever connected with the cam which when rotated by said lever slides over a power accepting surface of the driven part, the radius of the cam increasing in the direction of rotation in order to move the driven part against a resistance force about a first fulcrum.

A lever mechanism of this kind is disclosed by French Patent Specification FR—A—959,271.

The lever mechanism according to the invention is particularly applied to stone cutting machine tools.

A cutter for tiles and the like is known from British Patent Specification GB—A—621,263 comprising a stationary blade carried on a body portion and a movable blade or tooth normally spaced therefrom but movable towards the stationary blade against resilient restraint by means of a power transfering cam operated by a control lever, wherein the movable blade or tooth is carried on a spring loaded driven part.

In both disclosures the mechanism for power transfer and particularly the cams are to be designed determining in advance constructive parameters i.e. strokes, arms and powers applied and obtained in each position of driving leverage and of driven member.

Thus when the working conditions of each mechanism and of the object to be worked therefrom are constant feature and sizes and well known at the time of design the best results can be obtained. Whereas when the working conditions and sizes of the object to be worked are unknown or, even if known, are changeable, the best results cannot be obtained in any working condition. In fact each object to be worked requires the provision in correspondance of a small critical range of maximum power which can be established in advance only for objects to be worked having the same working features and sizes.

Therefore there is a strong demand of a lever mechanism and of a tool machine including the same which eliminate the aforesaid disadvantages.

The invention as claimed is intended to remedy these drawbacks by a lever mechanism of the above kind having the features that: the power transfering cam is connected for swinging movement about a second fulcrum by way of an intermediate lever arm one end of which being pivotable about said second fulcrum and the other end of which being hingedly connected to the axis of said cam, so that the connection so formed is of the toggle-joint type.

In a preferred embodiment the control lever connected with the power transfering cam is biased by means of a spring, in the direction of its initial position so that this control lever, when operated, turns the intermediate lever arm about the fulcrum during the first part of its stroke, thereby remaining in its initial position, until the movement of said intermediate lever arm is blocked, whereupon the control lever is swung about the pivot point of intermediate lever arm during the second part of its stroke, so that the surface of power transfering cam connected with said control lever rolls along the power accepting surface of the driven part.

Advantageously the power accepting surface is formed such that during both parts of the stroke of said control lever said driven part is forced to swing about its fulcrum.

The invention also involves a tool machine of the above kind having the features that it comprises a lever mechanism as claimed wherein the resulting force of resilient restraints providing the equilibrium angle between power transfering cam and intermediate lever arm that results in a control lever stroke in two parts has a component equal or superior to the reacting force provided by the resistance of tool engaging the object to be worked but clearly inferior to the reaction provided by the tool in the neighbour space following the contact with the object to be worked.

Thus the inventor with ingenious perception has conceived a lever mechanism and a tool machine embodying the same providing in a single stroke of control lever two distinct degrees of advantage on the tool. A first weak degree of advantage enough to approach the tool to the body to be worked and a second powerful degree of advantage as requested by the work to be done by the tool. The change from weakly advantageous condition to the strongly advantageous condition does not depend from tool position i.e. from correlative position of the antagonist surface, but by intervention of reaction force brought about by engagement of tool with the object to be worked. Such engagement may take place in a wide field of mutual positions of tool and object to be worked thanks to finding of a power accepting surface that is provided by a segment of logarithmic spiral satisfying the following equation:

$$\rho = e^{\theta \cdot \operatorname{tg}\gamma + K}$$

wherein

$\rho$ is a polar coordinate (vector radius);

$\theta$ is a polar coordinate (anomaly);

e is the Neperian constant;

$\gamma$ is the constant angle formed by the perpendicular to the vector radius $\rho$, at each point, with the tangent to the curve in such point;

K is a constant depending from size and design of driving and driven devices i.e. from polar coordinates as can be mathematically deduced from

$$K=\ln\rho_o-\theta_o tg\gamma.$$

The present invention provides an exceptional intrinsic novelty founded on a perception extremely close to the conception of simple machines. Such attributes render the lever mechanism or tool substantially universal in the meaning that its uses as to those of simple machines are without limits. Only for convenience and because the birth of such perception coheres with the invention of a novel machine for shearing tiles, particularly made of concrete, the description of an embodiment of the invention is rendered with reference to these machines in which it may be included and to building industry machines for shearing natural and artificial stones and the like which have sizes quite different. In order to explain in a better manner the features of the present invention, reference is to the accompanying drawings which show one possible embodiment thereof in schematic manner and merely by way of explanation.

Figure 1 is a side view of a machine for shearing tiles embodying the lever mechanism according to the present invention, such machine being in open condition.

Figure 2 is substantially a repetition of Figure 1 but the machine is in closed condition or better in the attitude in which the machine changes from the weakly advantageous condition to the strongly advantageous condition.

Figure 3 is a schematic diagram of forces representing the starting condition.

Figure 4 is substantially a repetition of Figure 3 but the diagram of forces here represents the condition corresponding to the end of first stage or approaching stage or weakly advantageous stage.

Figure 5 is substantially a repetition of Figures 3 and 4 but the diagram of forces here represents the condition of beginning of strongly advantageous stage.

Figure 6 is substantially a repetition of Figure 3, 4 and 5 but the diagram of forces here represents the condition of outstanding strongly advantageous stage.

With reference to Figures 1 and 2 of the drawing a lever mechanism according to the present invention comprises a driving unit and a driven unit; in other words the former receives and transfer the power and the latter receives the resultant force from the former. The driving unit of the lever mechanism comprises a control lever 13 which between its fulcrum 10 and power transfering cam 11 has an articulation 12. Between fulcrum 10 and articulation 12 an intermediate lever arm 14 is provided. The power transfering cam 11 provides at least two points 11′, 11″ of application of resultant force.

The driven unit 2 is provided with a power accepting surface 20 of points of application of the effort force determining all over the action field of power transfering cam 11 a rolling condition at least about point 11″ of application of resisting force added to the weight of the lever. According to a preferred embodiment of the present invention the power accepting surface 20 in order to have a rolling condition at least about point 11″, is a logarithmic spiral satisfying the following equation:

$$\rho=e^{\theta\,.\,tg\gamma+K}$$

wherein

$\rho$ is a polar coordinate (vector radius);
$\theta$ is a polar coordinate (anomaly);
e is the Neperian constant;
$\gamma$ is the constant angle formed by the perpendicular to the vector radius $\rho$, at each point, with the tangent to the curve in such point;
K is a constant depending from size and design of driving and driven devices i.e. from polar coordinates as can be mathematically deduced from

$$K=\ln\rho_o-\theta_o\,.\,tg\gamma.$$

In accordance to a preferred embodiment of the present invention $\gamma$ is chosen in such a manner that during the second part of the stroke of the control lever 13 the ratio between the tangential component and the radial component of the resisting force is smaller than the coefficient of friction between the materials involved, thus making backward sliding impossible during this second part of the stroke of the control lever 13. As the power accepting surface 20 will be made usually smooth and members 2 and 11 of steel or the like the angle $\gamma$ is chosen to be about 10°.

As shown in Figures 1 and 2 the present invention is embodied in a machine for shearing tiles made of concrete. A machine comprises in general a pair of points or shears 30 and 31 which are to be approached to contact the object to be sheared (not shown) in a weakly advantageous condition and then forced to shear the object to be worked in strongly advantageous conditions. Machine frame 4 is substantially shaped as an "L" and provided with four feet 40 (only two of them are shown in the drawings) and is provided at its top 41 with driving members of the lever mechanism. More particularly, the top 41 is provided with a fulcrum 10 of control lever 13. Moreover to the upper end 41 is connected at 41′ the end of a spring 5 whose other end is connected at 13′ to control lever 13. Furthermore, frame 4 is provided with a shear 31 extending vertically mounted in a suitable seat 42, at the base end opposed to end 41. The driven part 2 of the machine is substantially an elbow shaped second class lever fulcrumed at 24 on frame 4, the end 22 opposed to the fulcrum being provided with a movable point or shear 30. Second class lever 2 is forced upwardly by a resilient means e.g. a leaf spring 6.

Referring now to force diagrams shown in

Figures 3 to 6, control lever 13, fulcrum 10, articulation 12, power transfering cam 11, and intermediate lever arm 14 are recognizable. As regard to the forces involved there are shown forces 5′ and 5″ which are brought about by spring 5; force 6′ which is the resisting force brought about by leaf spring 6; force 60 which is the force opposed by the object (not shown) to working and which is increasing as well as force 13′ applied e.g. manually to lever 13. The forces R1, R2 and R3 shown in dashed lines are the resulting forces of the system having as cause force 13′. Going now to consider more particularly the practice of the operation of the machine, this machine is shown in opened condition in Figure 1, in which shears 30 and 31 are shown far apart each other so as to receive therebetween the object to be worked which could be of various sizes in a relative wide field of sizes.

Such position is brought about by springs 5 and 6. It can also be seen that in these conditions, the angle formed by the end 11 of lever 13 with arm 14 is an angle irreducible, such condition being brought about by a stop, not shown. On the other hand the force provided by spring 6 is clearly inferior to the one bringing about an increase of the angle formed by power transfering cam 11 with intermediate lever arm 14. Consequently turning lever 13 in an anticlockwise direction as shown in the figures of the drawings the end 11′, acting on the power accepting surface 20, causes the movable point or shear 30 to approach the fixed point or shear 31 or alternatively the object to be worked (not shown). Whereas, as shown in Figure 2 and Figures 5 and 6 when the resisting force opposed by mobile shear 30 to prosecute brings about a variation of the angle provided by the power transfering cam 11 with intermediate lever arm 14, then the fulcrum of the device becomes 12, the arrangement providing a rotation of end 11″ around the same fulcrum 12. In practice, as shown in Figure 2 the friction contact between point 11″ of application of effort and power accepting surface 20 is characterized by an adherence which is superior to the counteracting component to same, the arrangement providing a toggle-joint operation of the lever mechanism, i.e. a movement of revolution and rotation of articulation 12. This means providing a resulting force R3 more and more increasing, tending to infinite, in the optimal field of action of movable shear 30 viz. of penetration of the same shear into the object body bringing about the object shearing.

## Claims

1. Lever mechanism for power transfer comprising a power transfering cam (11) movable about its axis (12) a control lever (13) connected with the cam which when rotated by said lever slides over a power accepting surface (20) of the driven part (2), the radius of the cam (11) increasing in the direction of rotation in order to move the driven part against a resistance force about a first fulcrum (24) characterized in that the power transfering cam (11) is connected for swinging movement about a second fulcrum (10) by way of an intermediate lever arm (14) one end of which being pivotable about said second fulcrum and the other end of which being hingedly connected (at 12) to the axis of said cam, so that the connection so formed is of the toggle-joint type.

2. Lever mechanism, as claimed in claim 1, characterized in that the control lever (13) connected with the power transfering cam (11) is biased, by means of a spring (5), in the direction of its initial position so that this control lever, when operated, turns the intermediate lever arm (14) about the fulcrum (10) during the first part of its stroke, thereby remaining in its initial position, until the movement of said intermediate lever arm (14) is blocked, whereupon the control lever (13) is swung about the pivot point (12) of intermediate lever arm (14) during the second part of its stroke, so that the surface of power transfering cam (11) connected with said control lever (13) rolls along the power accepting surface (20) of the driven part (2).

3. Lever mechanism as claimed in claim 1 or 2 characterized in that the power accepting surface (20) is formed such that during both parts of the stroke of said control lever (13) said driven part (2) is forced to swing about its fulcrum (24).

4. Lever mechanism, as claimed in claim 3, characterized in that the power accepting surface (20) is provided by a segment of logarithmic spiral characterized by the following formula:

$$\rho = e^{\theta \cdot \mathrm{tg}\gamma + K}$$

wherein

$\rho$ is a polar coordinate (vector radius);
$\theta$ is a polar coordinate (anomaly);
e is the Neperian constant;
$\gamma$ is the constant angle formed by the perpendicular to the vector radius $\rho$, at each point, with the tangent to the curve in such point;
K is a constant depending from size and design of driving and driven devices i.e. from polar coordinates as can be mathematically deduced from:

$$K = \ln\rho_o - \theta_o \cdot \mathrm{tg}\gamma$$

5. Lever mechanism, as claimed in claim 4, characterized in that $\gamma$ is chosen in such a manner that during the second part of the stroke of the control lever (13) the ratio between the tangential component and the radial component of the resisting force is smaller than the coefficient of friction between the materials involved, thus making backward sliding impossible during this second part of the stroke of the control lever (13).

6. Lever mechanism, as claimed in claim 5, characterised in that the engaging members (11″, 20) are made of metal, steel or the like and the power accepting surface (20) is continuous and smooth and that $\gamma$ is about 10°.

7. A tool machine comprising a stationary blade (31) carried on a body portion (4) and a movable blade or tooth (30) normally spaced therefrom but movable towards the stationary blade against resilient restraint by means of a power transfering cam (11) operated by a control lever (13), wherein the movable blade or tooth is carried on a spring loaded driven part (2), characterized in that it comprises a lever mechanism as claimed in one of claims 1 to 6 wherein the resulting force of resilient restraints (5, 5′, 5″; 60) providing the equilibrium angle between power transfering cam (11) and intermediate lever arm (14) that results in a control lever stroke in two parts has a component equal or superior to the reacting force provided by the resistance of tool engaging the object to be worked but clearly inferior to the reaction provided by the tool in the neighbour space following the contact with the object to be worked.

**Revendications**

1. Mécanisme de leviers pour transférer la puissance, comprennant une came tournante autour de son axe (12) pour le transfert de la puissance, un levier (13) de commande coopèrant avec une came laquelle lorsqu'elle es tournée par dit levier glisse sur une surface (20) de la partie (2) commandée, le rayon de la came (11) accroissant vers la direction de rotation afin de mouvoir la partie commandee en opposition à la force de résistance autour d'une premier point d'appui (24), caractérisé en ce que la came (11) pour le transfert de la puissance se rattache, d'une manière roulante, à un deuxième point d'appui (10) par l'intermédiaire d'une branche (14) de levier, une première extrémité de laquelle est pivotante autour du susdit deuxieme point d'appui et l'ature extremite est connectée (en 12) à l'axe de la came d'une manière telle que la connexion résultante forme un système à genouillère.

2. Mécanisme de leviers suivant la revendication 1, caractérisé en ce que le levier (13) de commande coopérant avec la came (11) pour le transfert de la puissance est sollicitée, par un ressort (5) vers la position initiale d'une manière telle qu'en agissant sur ce levier, la branche (14) de levier est pivotée autour du point d'appui (10) pendant la première partie de sa course restant ensuit dans sa position initiale tant que le mouvement de la susdite branche (14) intermédiaire est empêché, après quoi le levier de commande est tourné autour du pivot (12) de la branche (14) de levier pendant la deuxième partie de sa course, d'une manière telle que la surface de la came (11) connectée avec le susdit levier (13) de commande roule sur la surface (20) réceptrice de la puissance de la partie (2) commandée.

3. Mécanisme de leviers suivant la revendication 1 ou 2, caractérisée en ce que la surface (20) réceptrice de la puissance est formée d'une manière telle que pendant les deux parties de la course du levier susdit (13) la susdite partie (2) commandée est sollicitée à tourner autour de son point d'appui (24).

4. Mécanisme de leviers suivant la revendication 3, caractérisé en ce que la surface (20) réceptrice de la puissance se compose d'un segment de spirale logarithmique caractérisée par la formule suivant:

$$\rho = e^{\theta \cdot tg\gamma + K}$$

où

$\rho$ est une coordonnée polaire (rayon vecteur);
$\theta$ est une coordonnée polaire (anomalie);
e est la constante neperien;
$\gamma$ est l'angle constant formé par la perpendiculaire au rayon vecteur ($\rho$) dans chaque point, avec la tangente à la courbe dans tel point;
K est une constante dépendante de la dimension et du dession de le commande et des dispositifs commandés, à savoir des coordonnéespolaires comme on peut mathématiquement calculer avec la formule:

$$K = \ln\rho_0 - \theta_0 tg\gamma.$$

5. Mécanisme de leviers, suivant la revendication 4, caractérisé en ce que $\gamma$ est choisi de façon que pendant la deuxième partie de la course de levier (13) de commande le rapport entre la composante tangentielle et la composante radiale de la force de la résistance est inférieure au coefficient de frottement entre les materiéls intéressés afin de empêcher un glissement en arrière pendant la deuxième partie de la course de levier (13) de commande.

6. Mécanisme de leviers, suivant la revendication 5, caractérisé en ce que les parties coopérantes (11″, 20) sont en métal, acier ou similaire et la surface (20) réceptrice de la puissance est continue et lisse et que $\gamma$ est environ 10°.

7. Machine-outil consistante en une lame (31) fixe portée par le bâti (4) et une lame ou dent (30) mobile normalement detachée de la lame fixe mais mouvable vers la lame fixe en opposition à une force élastique au moyen d'un came (11) pour le transfert de la puissance actionnée par un levier (13) de commande où la lame ou le dent (30) mobile est portée par une partie (2) commandée sollicitée par un ressort, caractérisé en ce qu'elle comprend un mécanisme de leviers suivant les revendications de 1 à 6 où la force résultante des moyens élastiques (5, 5′, 5″; 60) qui s'opposent pour la provision de l'angle d'équilibre entre la came (11) actionnée par la branche (14) de levier intermédiaire fournissante un course en deux

parties, a une composante égale ou supérieure à la force de réaction opposée par l'outil agissant sur la pièce en train d'y travail ler mais nettement inférieure à la force de réaction opposée par l'outil entre la partie de course suivante le contact avec la pièce en train d'y travailler.

**Patentansprueche**

1. Hebelsystem zur Kraftuebertragung, bestehend aus einer um ihre Achse (12) beweglichen Kraftuebertragungsnocke (11), einem Bedienungshebel (13) verbunden mit der Nocke, welche, wenn sie durch diesen Hebel gedreht wird, ueber eine Kraftabnehmende Oberflaeche (20) des angetriebenen Teils (2) gleitet, wobei der Radius der Nocke (11) in Rotationsrichtung zunimmt, so dass der angetriebene Teil gegen eine Widerstandskraft um einen ersten Drehpunkt (24) bewegt wird; dadurch gekennzeichnet, dass die kraftuebertragende Nocke (11) zur Ausfuehrung einer Schwingbewegung um einen zweiten Drehpunkt (10) mit einem Zwischenhebelarm (14) verbunden ist, wovon ein Ende um diesen zweiten Drehpunkt schwenkbar ist, und das andere Ende drehbar (bei 12) mit der Achse dieser Nocke verbunden ist, so dass eine Kniegelenkverbindung entsteht.

2. Hebelsystem nach Anspruch 1, dadurch gekennzeichnet, dass der mit der kraftuebertragenden Nocke (11) verbundene Bedienungshebel (13) durch eine Feder (5) in Richtung seiner Ausgangsposition vorgespannt ist, so dass dieser Bedienungshebel, wenn er betaetigt wird, waehrend der ersten Phase seiner Bewegung den Zwischenhebelarm (14) um den Drehpunkt (10) dreht, wobei er in seiner Ausgangsposition bleibt, bis die Bewegung dieses Zwischenhebelarms (14) blockiert wird, woraufhin der Bedienungshebel (13) waehrend der zweiten Phase seiner Bewegung um den Drehpunkt (12) geschwungen wird, so dass die mit besagtem Bedienungshebel (13) verbundene Oberflaeche der kraftuebertragenden Nocke (11) ueber die kraftabnehmende Oberflaeche (20) des angetriebenen Teils (2) rollt.

3. Hebelsystem nach Anspruch 1 oder 2, dadurch gekennzeichnet, dass die kraftabnehmende Oberflaeche (20) so geformt ist, dass wahrend beider Phasen der Bewegung des besagten Bedienungshebels (13) der besagte angetriebene Teil (2) gezwungen wird, um seinen Drehpunkt (24) zur schwingen.

4. Hebelsystem nach Anspruch 3, dadurch gekennzeichnet, dass die kraftabnehmende Oberflaeche (20) aus einem durch folgende Formel gekennzeichneten Segment einer logarithmischen Spirale besteht:

$$\rho=e^{\theta \cdot tg\gamma+K}$$

wobei

$\rho$ eine Polarkoordinate (Vektorradius) ist,
$\theta$ eine Polarkoordinate (Anomalie)
e die Neperkonstante
$\gamma$ der konstante Winkel, gebildet durch die Senkrechte zum Vektorradius $\rho$, in jedem Punkt, mit der Tangente zur Kurve in diesem Punkt.
K eine Konstante, abhaengig von Groesse und Form des Antriebs und der angetriebenen Vorrichtungen, d.h. von Polarkoordinaten, wie mathematisch abgeleitet werden kann aus:

$$K=\ln\rho_o-\theta_o \cdot tg\gamma$$

5. Hebelsystem nach Anspruch 4, dadurch gekennzeichnet, dass $\gamma$ so gewaehlt wird, dass waehrend der zweiten Phase der Bewegung des Bedienungshebels (13) das Verhaeltnis zwischen der Tangentialkomponente und der Radialkomponente der Widerstandskraft geringer ist, als der Reibungskoeffizient zwischen den beteiligten Materialien, so dass ein Rueckwaertsgleiten waehrend dieser zweiten Phase der Bewegung des Bedienungshebels (13) unmoeglich gemacht wird.

6. Hebelsystem nach Anspruch 5, dadurch gekennzeichnet, dass die Einrueckteil (11", 20) aus Metal, Stahl oder dergl. gemacht sind und die Kraftabnehmende Oberflaeche (20) fortlaufend und glatt ist, und dass $\gamma$ etwa 10° betraegt.

7. Eine Werkzeugmaschine mit einer auf einem Rumpfteil (4) fest angebrachten Schneide (31), und einer beweglichen Schneide oder einem beweglichen Zahn (30), welche(r) normalerweise mit einem Abstand dazu angeordnet ist, aber mittels einer durch einen Bedienungshebel (13) betaetigten Kraftuebertragenden Nocke (11) gegen einen federnden Rueckhalt auf die festsitzende Schneide hin bewegt werden kann, wobei die bewegliche Schneide bzw. der bewegliche Zahn auf einem gefederten angetriebenen Teil (2) angebracht ist; dadurch gekennzeichnet, dass sie ein Hebelsystem nach einem der Ansprueche 1 bis 6 enthaelt, worin die resultierende Kraft der federnden Rueckhalte (5, 5', 5"; 60), welche den in einer zweiphasigen Bewegung des Bedienungshebels resultierenden Gleichgewichtswinkel zwischen der kraftuebertragenden Nocke (11) und dem Zwischenhebelarm (14) hervorbringt, eine Komponente aufweist, die gleiche oder hoeher ist als die reagierende Kraft, die durch den Widerstand des Werkzeugs hervorgerufen wird, welches den zu bearbeitenden Gegenstand festhaelt, aber eindeutig niedriger als die Reaktion, die durch das Werkzeug im Nachbarabstand hervorgerufen wird, welches dem Kontakt mit dem zu bearbeitenden Gegenstand folgt.

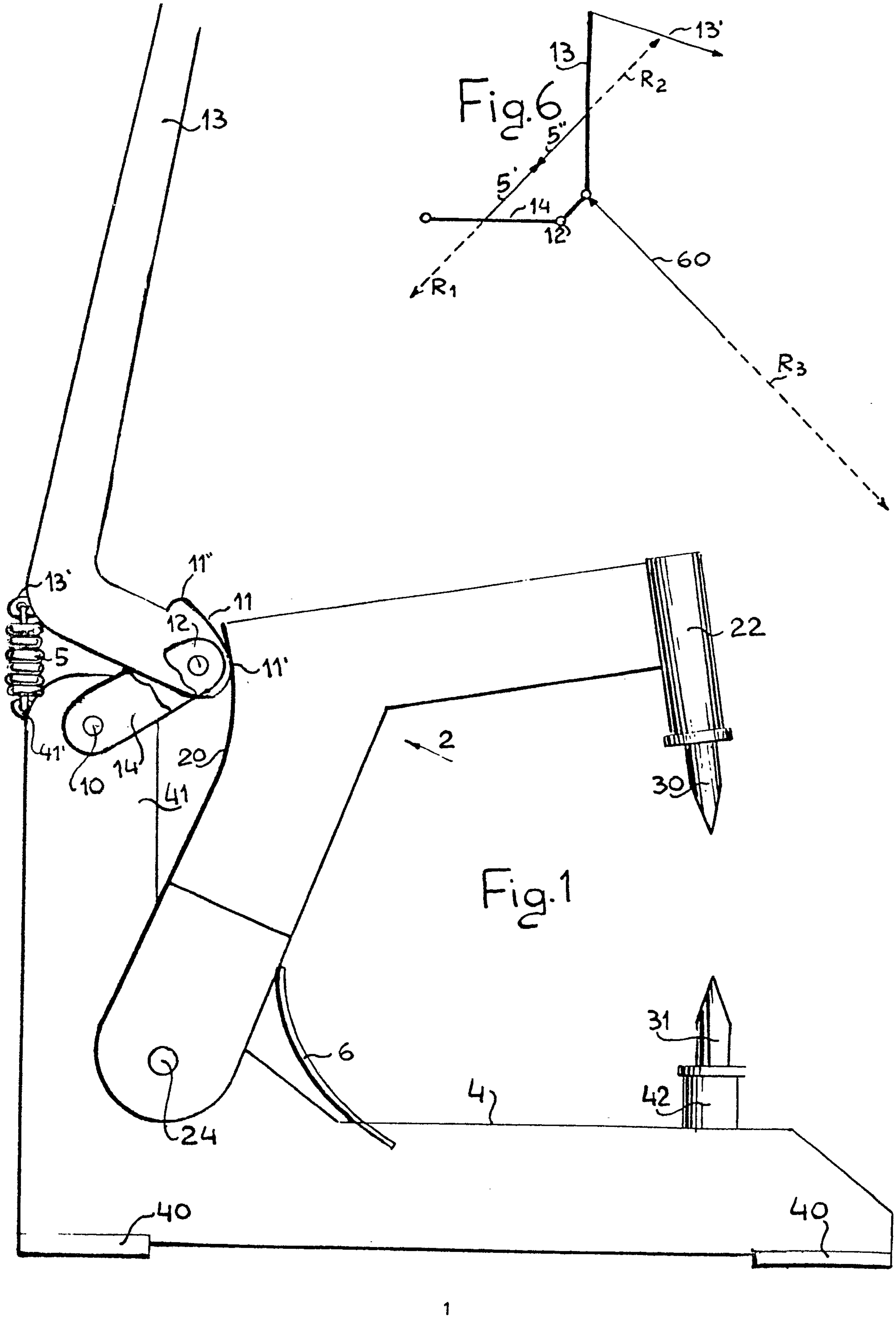
13'
13
R2
5"
5'
14
12
60
R1
R3
13
11"
13'
11
12
22
5
11'
2
41'
20
10
14
41
30
31
6
4
42
24
40
40

Fig.6

Fig.1

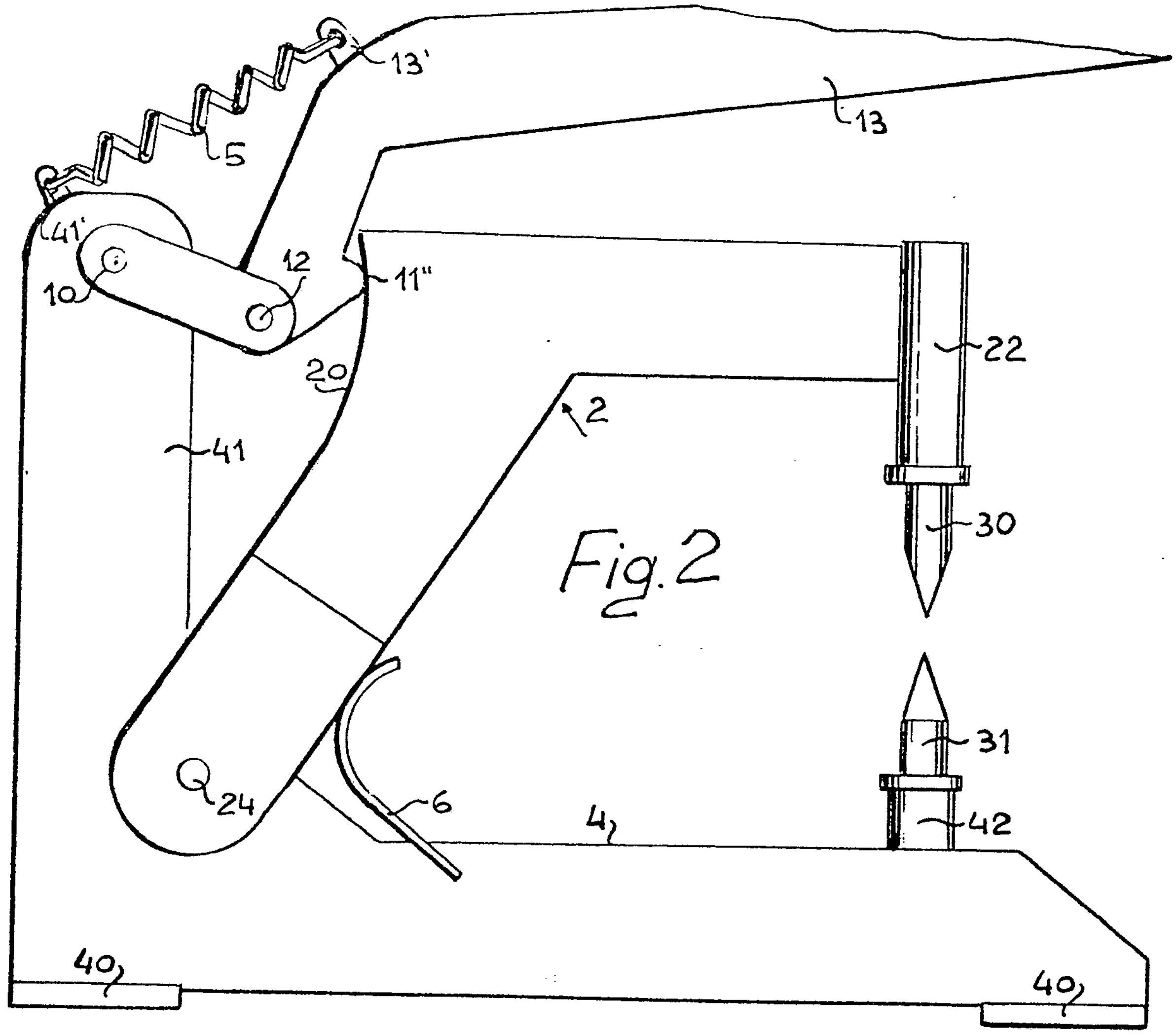


Fig. 2

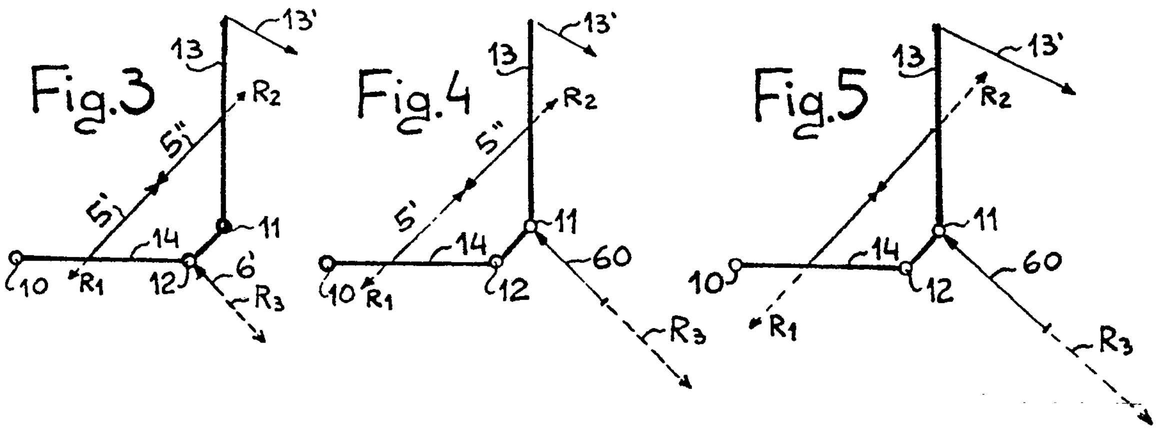


Fig. 3 Fig. 4 Fig. 5